# EUROPÄISCHE PATENTSCHRIFT

(11) **EP 3 628 142 B1**
(45) Veröffentlichungstag und Bekanntmachung des Hinweises auf die Patenterteilung: **24.01.2024**
(21) Anmeldenummer: 19192525.4
(22) Anmeldetag: 20.08.2019
(51) Int. Cl.: A01D 61/00, A01D 41/14

(54) **SCHNEIDWERK FÜR EINE LANDWIRTSCHAFTLICHE ERNTEMASCHINE SOWIE VERFAHREN ZUM BETRIEB EINES SCHNEIDWERKS**
CUTTING MECHANISM FOR AN AGRICULTURAL HARVESTING MACHINE AND METHOD FOR OPERATING A CUTTING MECHANISM
DISPOSITIF DE COUPE POUR UN ENGIN D'ABATTAGE-FAÇONNAGE AGRICOLE AINSI QUE PROCÉDÉ DE FONCTIONNEMENT D'UN DISPOSITIF DE COUPE

(30) Priorität: 28.09.2018 DE 102018124012
(43) Veröffentlichungstag der Anmeldung: 01.04.2020
(73) Patentinhaber: CLAAS Selbstfahrende Erntemaschinen GmbH, 33428 Harsewinkel (DE)
(72) Erfinder: Dehmelt, Jan, 33649 Bielefeld (DE); Baumgarten, Joachim, 48361 Beelen (DE); Eidhoff, Lukas, 33332 Gütersloh (DE); Beschorn, Udo, 33428 Harsewinkel (DE); Wielenberg, Andreas, 32049 Herford (DE); Bellmann, Rainer, 33428 Harsewinkel (DE)
(74) Vertreter: CLAAS Gruppe

(56) Entgegenhaltungen:
- EP-A1- 0 891 697
- EP-A1- 2 250 872
- DE-A1- 4 021 030
- US-A1- 2007 186 529
- US-A1- 2017 208 738

## Beschreibung

Die vorliegende Anmeldung betrifft ein Schneidwerk gemäß dem Oberbegriff von Anspruch 1. Ferner betrifft die vorliegende Anmeldung eine landwirtschaftliche Erntemaschine gemäß Anspruch 9 sowie ein Verfahren zum Betrieb eines Schneidwerks gemäß dem Oberbegriff von Anspruch 10.

Das Schneidwerk umfasst einen Tragrahmen, einen an dem Tragrahmen angeordneten Mähbalken sowie eine drehantreibbar an dem Tragrahmen gelagerte Einzugswalze. Der Mähbalken dient dazu, zu erntende Pflanzen, beispielsweise Gerste, Raps oder Weizen, abzuschneiden, sodass diese mittels der Erntemaschine, die insbesondere von einem Mähdrescher gebildet sein kann, weiterverarbeitet werden können. Die Breite eines Schneidwerks übersteigt in aller Regel die Breite der übrigen zugehörigen Erntemaschine deutlich, sodass über die gesamte Breite des Schneidwerks hinweg geschnittene Pflanzen zunächst in dem Schneidwerk zusammengeführt werden müssen, bevor sie mittels der Erntemaschine weiterverarbeitet werden können. Insbesondere ist es üblich, die geschnittenen Pflanzen in einem Mittelbereich des Schneidwerks zusammenzuführen, um diese sodann ausgehend von dem Mittelbereich an einen dem Schneidwerk nachgeordneten Schrägförderer der jeweiligen Erntemaschine zu übergeben. Zur Förderung der geschnittenen Pflanzen in die Breitenrichtung des Schneidwerks dient die genannte Einzugswalze. Diese erstreckt sich in aller Regel zumindest im Wesentlichen über eine gesamte Breite des Schneidwerks und ist dazu geeignet, die geschnittenen Pflanzen zu fördern. Je nach Ausgestaltung des Schneidwerks kann die Einzugswalze beispielsweise zumindest teilweise in Form einer Einzugsschnecke ausgebildet sein, die die gewünschte Förderwirkung gemäß dem Prinzip einer Förderschnecke erzielt. Dabei versteht es sich, dass Windungen einer solchen Einzugsschnecke in den einander gegenüberliegenden Seitenbereichen des Schneidwerks, die sich beidseits des Mittelbereichs erstrecken, entgegengesetzt um einen Kern der Einzugsschnecke gewunden sind, sodass jeweils eine Förderwirkung in Richtung des Mittelbereichs bewirkt wird.

Das Schneidwerk verfügt weiterhin über mindestens ein Abstreifmittel, dass der Einzugswalze zugeordnet ist. Insbesondere kann das Abstreifmittel parallel zu der Einzugswalze ausgerichtet sein und sich über eine Länge des Abstreifmittels hinweg zumindest im Wesentlichen in einem konstanten Abstand zu der Einzugswalze befinden, wobei das Abstreifmittel sich in einem Abstand von der Einzugswalze in eine Längsrichtung zur Einzugswalze hin, insbesondere in etwa radialer Richtung der Einzugswalze zu dieser hin, erstreckt. Der Abstand des Abstreifmittels von der Einzugswalze beträgt in der Regel wenige Millimeter bis hin zu wenigen Zentimetern, sodass das Abstreifmittel geeignet ist, geschnittene Pflanzen, die sich im Zuge der Rotation der Einzugswalze um deren Längsachse in Umfangsrichtung der Einzugswalze um selbige zu wickeln drohen, abzustreifen und auf diese Weise daran zu hindern, die Einzugswalze zu umwickeln. Mithin dient das Abstreifmittel dazu, ein "Umwickeln" der Einzugswalze mit geschnittenen Pflanzen zu verhindern. Besagtes Umwickeln kann zu einem Festsetzen der Einzugswalze führen, woraufhin der Betrieb der Erntemaschine unterbrochen werden muss, um die Umwicklung zu lösen.

Da verschiedene Ernten grundsätzlich verschiedenen Ernte- und Betriebsparametern unterliegen können, ist es in der Praxis regelmäßig notwendig, die Einzugswalze relativ zu dem Tragrahmen mittels einer Bewegungseinrichtung zu bewegen. Auf diese Weise wird insbesondere ein Abstand der Einzugswalze von einem Muldenboden des Schneidwerks, auf dem die geschnittenen Pflanzen nach ihrem Abschnitt mittels der Einzugswalze gefördert werden, verändert. Somit ist es beispielsweise denkbar, dass bei einer höheren Dichte zu schneidender Pflanzen die Einzugswalze angehoben werden muss, um den sich entsprechend der höheren Dichte ergebenden dickeren Pflanzenteppich, der auf dem Muldenboden gefördert wird, verarbeiten zu können. Mittels des Anhebens der Einzugswalze wird demzufolge den geschnittenen Pflanzen ein zusätzlicher Raum zur Verfügung gestellt, sodass diese ohne Weiteres entlang des Schneidwerks förderbar sind.

Schneidwerke der vorstehend beschriebenen Art sind im Stand der Technik bereits bekannt. So wird beispielhaft auf die deutsche Offenlegungsschrift DE 40 21 030 A1 hingewiesen. Diese beschreibt ein Schneidwerk, dessen Einzugswalze mittels einer Bewegungseinrichtung relativ zu dem Tragrahmen des Schneidwerks bewegbar ist. Insbesondere kann die Einzugswalze zwischen einer Vorderposition und einer Hinterposition bewegt werden. Ferner ist es möglich, die Einzugswalze bei Vorliegen in ihrer Hinterposition anzuheben und auf diese Weise zwischen einer Tiefposition und einer Hochposition zu überführen.

Das bekannte Schneidwerk ist derart ausgebildet, dass ein Abstreifmittel relativ zu der Einzugswalze festgelegt ist, indem das Abstreifmittel unmittelbar an einem Lagerelement befestigt ist, an dem auch die Einzugswalze gelagert ist. Dies bietet zwar den Vorteil, dass das Abstreifmittel sich unabhängig von einer Bewegung der Einzugswalze relativ zu dem Tragrahmen immer in demselben Abstand von der Einzugswalze befindet. Dies ist insoweit von Bedeutung, als der Abstand zwischen dem jeweiligen Abstreifmittel und der Einzugswalze zur effektiven Verhinderung der vorstehend beschriebenen "Umwicklung" der Einzugswalze mit geschnittenen Pflanzen auf ein bestimmtes Maß eingestellt sein und in aller Regel beibehalten werden sollte. Somit kann das Abstreifmittel bei einer Erhöhung des Abstandes zwischen der Einzugswalze und dem Abstreifmittel gegebenenfalls die Umwickelung der Einzugswalze mit den geschnittenen Pflanzen nicht länger verhindern, da die in Umfangsrichtung der Einzugswalze mitgeschleppten Pflanzen nicht von dem Abstreifmittel erfasst werden. Folglich kann das Abstreifmittel die Pflanzen nicht in der gewünschten Weise abstreifen.

Der Vorteil des stets konstanten Abstandes zwischen dem Abstreifmittel und der Einzugswalze gemäß dem Stand der Technik geht jedoch unweigerlich mit dem Nachteil einher, dass das Abstreifmittel als solches ebenfalls relativ zu dem Tragrahmen (nämlich immer gemeinsam mit der Einzugswalze) bewegt wird. Somit kann das Abstreifmittel je nach Stellung der Einzugswalze einen Gutfluss der geschnittenen Pflanzen stören, wodurch insbesondere eine Übergabe der geschnittenen Pflanzen an einen jeweils nachgeschalteten Schrägförderer behindert sein kann. Ferner führt das Mitführen des Abstreifmittels dazu, dass sich hinter dem Abstreifmittel ein Freiraum ausbilden kann, in dem mangels Antrieb keine Strömung der geschnittenen Pflanzen mehr stattfindet. Es ist mithin damit zu rechnen, dass innerhalb kürzester Zeit ein Fluss der geschnittenen Pflanzen entlang des Schneidwerks zum Erliegen kommt und das Schneidwerk sodann verstopft.

Der vorliegenden Anmeldung liegt mithin die Aufgabe zugrunde, ein Schneidwerk bereitzustellen, bei dem trotz einer ortsfesten Anordnung eines jeweiligen Abstreifmittels an dem Tragrahmen eine Bewegung der Einzugswalze relativ zu dem Tragrahmen möglich ist, ohne dass hierdurch eine Neigung der Einzugswalze zum Umwickeln mit geschnittenen Pflanzen ansteigt.

Die zugrunde liegende Aufgabe wird erfindungsgemäß mittels eines Schneidwerks mit den Merkmalen des Anspruchs 1 gelöst. Vorteilhafte Ausgestaltungen ergeben sich aus den Unteransprüchen 2 bis 8.

Das erfindungsgemäße Schneidwerk ist dadurch gekennzeichnet, dass die Einzugswalze mittels der Bewegungseinrichtung, vorzugsweise spielfrei, auf einer Kurvenbahn bewegbar ist. Diese Kurvenbahn ist derart ausgebildet, dass sich der Abstand des an den Tragrahmen fest angeordneten Abstreifmittels von der Einzugswalze im Zuge der Bewegung der letzteren zumindest in einem Bewegungsbereich der Einzugswalze zumindest nicht nennenswert, vorzugsweise gar nicht, verändert. Der Abstand zwischen der Einzugswalze und dem Abstreifmittel wird dabei in die Radialrichtung der Einzugswalze, das heißt senkrecht bezogen auf einen Umfangskreis der Einzugswalze, gemessen, wobei der Umfangskreis mit einem Außendurchmesser der Einzugswalze um die Längsachse der Einzugswalze gezogen ist.

Die Bewegung der Einzugswalze findet vorzugsweise innerhalb einer senkrecht zu einer Längsachse der Einzugswalze geführten Bewegungsebene statt. Dabei ist es grundsätzlich denkbar, dass die Einzugswalze lediglich in einem Mittelbereich bewegt wird, während seitliche Enden der Einzugswalze fest an dem Tragrahmen des Schneidwerks befestigt sind. Die Bewegung der Einzugswalze führt bei einer solchen Ausgestaltung mithin dazu, dass letztere in einem gewissen Umfang gebogen wird. Die Bewegung der Einzugswalze in deren Mittelbereich ist typischerweise ausreichend, da die Zusammenführung der geschnittenen Pflanzen und ein damit einhergehender Anstieg einer Dicke des Pflanzenteppichs lediglich in dem Mittelbereich vorliegt, in dem die geschnittenen Pflanzen ausgehend von den Seitenbereichen der Einzugswalze zusammengeführt werden.

Das erfindungsgemäße Schneidwerk hat viele Vorteile. Insbesondere ist die Möglichkeit gegeben, die Einzugswalze zu bewegen, insbesondere relativ zu einem Muldenboden des Schneidwerks anzuheben und abzusenken, ohne dass hierbei die Abstreifwirkung des Abstreifmittels beeinträchtigt wird. Letzteres liegt darin begründet, dass sich der Abstand zwischen der Einzugswalze und dem Abstreifmittel trotz der Bewegung der Einzugswalze nicht ändert, sodass geschnittene Pflanzen, die im Zuge der Rotation der Einzugswalze von letzterer in deren Umfangsrichtung "mitgeschleppt" werden, mittels des Abstreifmittels zuverlässig abgestreift werden können. Die Bewegung der Einzugswalze auf der Kurvenbahn hat dabei einen entscheidenden Einfluss darauf, dass besagter Abstand zwischen dem Abstreifmittel und der Einzugswalze zumindest im Wesentlichen unverändert bleibt, obwohl das Abstreifmittel an dem Tragrahmen angeordnet ist und sich demzufolge die Einzugswalze im Zuge ihrer Bewegung auch relativ zu dem Abstreifmittel bewegt.

Ein weiterer Vorteil ist darin zu sehen, dass sich ein Abstand sogenannter Einzugsfinger, die insbesondere in dem Mittelbereich des Schneidwerks an der Einzugswalze angeordnet sein können und sich radial zu einer Mantelfläche der Einzugswalze erstrecken, von einer Muldenwand des Schneidwerks nicht ändert. Insbesondere bleibt der Abstand der Einzugsfinger von der Muldenwand im Bereich des Abstreifmittels trotz Bewegung der Einzugswalze zumindest im Wesentlichen, vorzugsweise vollständig, konstant. Die mit den Einzugsfingern erzeugte Förderwirkung, die insbesondere eine Förderung der geschnittenen Pflanzen in radiale Richtung und mithin in Richtung des dem Schneidwerk nachgeschalteten Schrägförderers bewirken, bleibt demzufolge trotz Bewegung der Einzugswalze relativ zu dem Tragrahmen zumindest im Wesentlichen erhalten.

In einer vorteilhaften Ausgestaltung des erfindungsgemäßen Schneidwerks umfasst die Bewegungseinrichtung ein Viergelenk, mittels dessen eine axiale Antriebskraft mindestens eines Antriebsmittels in eine kombinierte translatorisch-rotatorischen Bewegung eines Bewegungselements der Bewegungseinrichtung übersetzbar ist. Besagte translatorisch-rotatorische Bewegung des Viergelenks führt dazu, dass sich die Einzugswalze auf einer gewünschten Kurvenbahn bewegt, wobei insbesondere voneinander linear unabhängige Bewegungskomponenten überlagert werden. Somit wird die Einzugswalze vorzugsweise in einer senkrecht zu deren Längsachse orientierter Bewegungsebene im Zuge der Betätigung des Antriebsmittels mittels der Bewegungseinrichtung sowohl in eine vertikale als auch in eine horizontale Richtung bewegt, wobei diese beiden Bewegungskomponenten sich innerhalb der Bewegungsebene überlagern und auf diese Weise die Bewegung der Einzugswalze auf einer Kurvenbahn beschreiben.

Das Antriebsmittel, mittels dessen die Bewegungseinrichtung antreibbar ist, kann insbesondere von einer hydraulischen, elektrohydraulischen, pneumatischen oder elektropneumatischen Kolben-Zylinder-Einheit oder von einem Linearantrieb gebildet sein. Ebenfalls ist es denkbar, dass das Antriebsmittel von einem manuell bedienbaren Spannmittel gebildet ist.

Bei Verwendung eines beschriebenen Viergelenks kann es weiterhin besonders vorteilhaft sein, wenn selbiges zumindest zwei Pendelstäbe umfasst, deren erste Enden jeweils verdrehbar an einem Auflager und deren zweite Enden jeweils verdrehbar an einem gemeinsamen Bewegungselement gelagert sind. Das Auflager kann insbesondere ortsfest an dem Tragrahmen angeordnet sein, sodass eine Bewegung des Bewegungselements relativ zu dem Auflager und mithin relativ zu dem Tragrahmen mittels Verdrehung der Pendelstäbe relativ zu dem Auflager möglich ist. Die Pendelstäbe bilden dabei sowohl an dem Auflager als auch an dem Bewegungselement jeweils ein Gelenk aus, sodass sie sowohl relativ zu dem Auflager als auch relativ zu dem Bewegungselement verdrehbar sind. Vorteilhafterweise sind die Pendelstäbe in einer gemeinsamen Bewegungsebene angeordnet, die ferner vorzugsweise senkrecht zu der Längsachse der Einzugswalze angeordnet ist. Mithin sind Drehachsen der Pendelstäbe, die letztere sowohl an dem Auflager als auch dem Bewegungselement ausbilden, vorzugsweise parallel zu der Längsachse der Einzugswalze orientiert. Eine Bewegung des Bewegungselements relativ zu dem Auflager findet bei einer solchen Ausgestaltung folglich innerhalb der beschriebenen Bewegungsebene und mithin in eine zu der Längsachse der Einzugswalze senkrechte Richtung statt. Vorteilhafterweise wirkt das Antriebsmittel mit dem Bewegungselement zusammen, sodass eine mittels des Antriebsmittels ausgeübte Antriebskraft unmittelbar eine Bewegung des Bewegungselements bewirkt, wobei jeweils die Pendelstäbe relativ zu dem Bewegungselement sowie relativ zu dem Auflager verdreht werden. Die Anordnung des Antriebsmittels an dem Bewegungselement bietet zudem den Vorteil, dass das Antriebsmittel als zusätzliches Auflager für das Bewegungselement dienen kann, sodass selbiges relativ zu dem Auflager arretierbar ist.

Die Ausgestaltung eines solchen Schneidwerks ist ferner dann besonders von Vorteil, wenn die Pendelstäbe verschiedene Längen aufweisen. Vorteilhafterweise ist die Länge eines ersten Pendelstabes, der oberhalb eines zweiten Pendelstabes angeordnet ist, kürzer als die Länge des zweiten Pendelstabs. Die Ausgestaltung der Pendelstäbe mit unterschiedlichen Längen führt dazu, dass die Anlenkpunkte für die Pendelstäbe an dem Bewegungselement, das heißt die zweiten Enden der Pendelstäbe, im Zuge einer Bewegung des Bewegungselements auf verschiedenen Radien um die Anlenkpunkte der Pendelstäbe an dem Auflager geführt werden. Dies führt wiederum dazu, dass das Bewegungselement im Zuge seiner Bewegung neben einem translatorischen Bewegungsanteil ferner einen rotatorischen Bewegungsanteil aufweist. Mittels geeigneter Dimensionierung der Pendelstäbe und des Bewegungselements kann auf diese Weise eine kombinierte translatorisch-rotatorische Bewegung erzeugt werden, mittels derer die Einzugswalze in der vorstehend beschriebenen Weise auf einer gewünschten Kurvenbahn führbar ist. Alternativ zu einer Ausgestaltung der Pendelstäbe mit verschiedenen Längen ist es ebenfalls denkbar, die Pendelstäbe mit zumindest im Wesentlichen, vorzugsweise vollständig, gleicher Länge auszubilden.

Insbesondere ist es denkbar, dass das Viergelenk mittels mindestens eines Übertragungselements, beispielsweise eines in sich starren Tragblechs, mit der Einzugswalze gekoppelt ist, sodass eine Bewegung des Bewegungselements unmittelbar auf eine gleichartige Bewegung der Einzugswalze übertragbar ist. Die Ausbildung des Übertragungselements in einer gewissen Länge trägt dabei dazu bei, dass die Einzugswalze eine gegenüber der Bewegung des Bewegungselements betragsmäßig größere Bewegung ausführt, sodass eine Bewegung des Bewegungselements innerhalb eines vergleichsweise geringen Bewegungsraumes gleichwohl eine nennenswerte und technisch erhebliche Bewegung der Einzugswalze bewirken kann.

Sofern vorstehend beschriebene Pendelstäbe vorgesehen sind, kann es weiterhin von Vorteil sein, wenn die Enden der Pendelstäbe jeweils in eine Lagerpfanne eingelegt sind. Hierbei sind die Enden der Pendelstäbe vorzugsweise konvex kreisförmig ausgebildet, während die Lagerpfannen komplementär konkav ausgeformt sind. Auf diese Weise können die Pendelstäbe in den zugeordneten Lagerpfannen frei verdreht werden, sodass sich die gewünschten Gelenke ausbilden. Eine derartige Lagerung der Pendelstäbe an dem Auflager und/oder an dem Bewegungselement ist besonders reibungsarm und erlaubt mithin eine präzise Einstellung des Bewegungselements relativ zu dem Auflager. Vorteilhafterweise ist bei dieser Ausgestaltung das Bewegungselement zwecks einer Kraft übertragenden Verbindung mit dem Auflager mittels mindestens eines Spannelements gegen das Auflager verspannt. Vorzugsweise umfasst das Viergelenk eine Mehrzahl von Spannelementen, insbesondere zwei Spannelemente. Diese können beispielsweise in Form von Spannschrauben ausgebildet sein, die - um der Verdrehung des Bewegungselements relativ zu dem Auflager folgen zu können - gleichermaßen sowohl an dem Auflager als auch an dem Bewegungselement unter Ausbildung entsprechender Drehgelenke angeschlossen sind. Die Verspannung des Bewegungselements gegen das Auflager trägt insbesondere dazu bei, dass das Bewegungselement spielfrei relativ zu dem Auflager führbar ist. Auf diese Weise können mittels des Antriebsmittels bewirkte Kräfte gleichermaßen spielfrei in entsprechende Bewegungen des Bewegungselements übersetzt werden.

Unabhängig von ihrer konkreten Ausgestaltung kann es weiterhin von Vorteil sein, wenn die Bewegungseinrichtung in einem Mittelbereich des Schneidwerks angeordnet ist. Wie vorstehend bereits dargelegt, kann es für eine Bewegung der Einzugswalze relativ zu dem Tragrahmen ausreichend sein, besagte Bewegung in dem Mittelbereich der Einzugswalze vorzusehen. Insbesondere kann die Bewegungseinrichtung genau in der Mitte der Einzugswalze angeordnet sein. Vorzugsweise wirkt die Bewegungseinrichtung mit einem Übertragungselement zusammen, das wiederum mit der Einzugswalze gekoppelt ist. Dabei ist es insbesondere denkbar, dass das Übertragungselement die Einzugswalze in einen linken Abschnitt und einen rechten Abschnitt unterteilt, wobei an dem Übertragungselement beidseitig Koppelscheiben ausgebildet sind, mittels derer die Einzugswalze verdrehbar an dem Übertragungselement lagerbar ist. Somit ist die Einzugswalze an dem Übertragungselement gelagert, wobei eine Rotation der Einzugswalze relativ zu dem Übertragungselement möglich bleibt. Die Anordnung des Übertragungselements möglichst mittig an der Einzugswalze bietet den Vorteil, dass eine Bewegung der Bewegungseinrichtung sich zu möglichst gleichen Teilen auf den linken Abschnitt und den rechten Abschnitt der Einzugswalze auswirkt.

In einer weiteren Ausführungsform ist es denkbar, zwei Bewegungseinrichtungen vorzusehen, von denen jeweils eine an einem der sich gegenüberliegenden äußeren Enden der Einzugswalze angeordnet ist. Diese Ausgestaltung kann insbesondere dann vorteilhaft sein, wenn die Einzugswalze einteilig ausgebildet ist. Die Bewegungseinrichtungen werden vorzugsweise synchron betrieben, sodass die Einzugswalze stets als Ganzes bewegt wird. Weiterhin ist es denkbar, dass eine Einzugswalze sowohl an ihren äußeren Enden als auch in einem Mittelbereich mit Bewegungseinrichtungen zusammenwirkt. Insbesondere kann die jeweilige Einzugswalze dann mit drei Bewegungseinrichtungen ausgestattet sein, von denen zwei an den Enden der Einzugswalze und die dritte in dem Mittelbereich, vorzugsweise der Mitte, der Einzugswalze angeordnet sind.

Das erfindungsgemäße Schneidwerk weiter ausgestaltend umfasst selbiges mindestens eine Steuerung, mittels derer das Antriebsmittel automatisch, vorzugsweise in Abhängigkeit mindestens eines Ernteparameters und/oder mindestens eines Betriebsparameters, ansteuerbar ist. Mittels einer solchen Steuerung ist die Möglichkeit geschaffen, eine Bewegung der Einzugswalze mittels der Bewegungseinrichtung automatisch, das heißt ohne Zutun eines Maschinenführers der jeweils dem Schneidwerk zugeordneten Erntemaschine, zu bewegen, um mittels der Bewegung auf sich verändernde Umstände des Ernteprozesses zu reagieren. Beispielsweise ist es denkbar, dass sich die Dichte der zu erntenden Pflanzen verändert, worauf hin die Einzugswalze angehoben oder abgesenkt werden sollte. Weiterhin ist es denkbar, dass infolge eines Niederschlags sich die Feuchte des Ernteguts verändert, wodurch ebenfalls eine Bewegung der Einzugswalze relativ zu dem Tragrahmen indiziert sein kann.

Die zugrunde liegende Aufgabe wird ferner erfindungsgemäß mittels einer landwirtschaftlichen Erntemaschine mit den Merkmalen des Anspruchs 9 gelöst. Eine solche Erntemaschine, die insbesondere von einem Mähdrescher gebildet sein kann, umfasst neben einer Verbrennungskraftmaschine, die zum Antrieb der Erntemaschine dient, sowie einer Mehrzahl von Arbeitsorganen zur Verarbeitung des Ernteguts ein erfindungsgemäßes Schneidwerk gemäß der vorstehenden Beschreibung. Weitere Arbeitsorgane einer solchen Erntemaschine können beispielsweise von einem Schrägförderer, einem Dreschorgan, einem Trennorgan, und/oder einem Häckselorgan gebildet sein.

Eine erfindungsgemäße Erntemaschine ist mittels des erfindungsgemäßen Schneidwerks besonders einfach herstellbar. Die Vorteile einer solchen Erntemaschine ergeben sich analog zu der vorstehenden Beschreibung, wobei insbesondere eine Bewegung der Einzugswalze des Schneidwerks auf einer Kurvenbahn möglich ist, sodass sich eine Position der Einzugswalze relativ zu dem Tragrahmen des Schneidwerks verändert, ohne dass dies mit einer Veränderung des Abstands der Einzugswalze von dem Abstreifmittel einhergeht.

Die erfindungsgemäße Erntemaschine kann vorteilhafterweise mit einer Steuerung ausgebildet sein, die mittels einer kabellosen oder einer kabelgebundenen Datenverbindung mit der Bewegungseinrichtung des Schneidwerks verbunden ist. Auf diese Weise ist es möglich, dass die Bewegungseinrichtung automatisch, das heißt ohne händisches Zutun des Maschinenführers, mittels der Steuerung ansteuerbar ist, woraufhin die Einzugswalze relativ zu dem Tragrahmen bewegbar ist. Dem Eingriff oder der manuellen Bedienung der Bewegungseinrichtung des Maschinenführers bedarf es mithin nicht.

Die Aufgabe wird schließlich erfindungsgemäß mittels eines Verfahrens mit den Merkmalen des Anspruchs 10 gelöst. Vorteilhafte Ausgestaltungen ergeben sich aus den Unteransprüchen 11 und 12.

Das erfindungsgemäße Verfahren sieht vor, dass auf einem Untergrund stehende Pflanzen mittels eines Mähbalkens eines Schneidwerks abgeschnitten werden. Die abgeschnittenen Pflanzen werden sodann mittels einer an dem Tragrahmen des Schneidwerks drehangetriebenen Einzugswalze in Richtung eines Mittelbereichs des Schneidwerks gefördert. Um ein vorstehend beschriebenes "Umwickeln" der Einzugswalze mit abgeschnittenen Pflanzen zu verhindern, werden zudem sich im Zuge des Betriebs der Einzugswalze in deren Umfangsrichtung bewegende Pflanzen mittels mindestens eines an dem Tragrahmen angeordneten Abstreifmittels abgestreift.

Das erfindungsgemäße Verfahren ist nunmehr dadurch gekennzeichnet, dass die Einzugswalze mittels einer Bewegungseinrichtung relativ zu dem Tragrahmen auf einer Kurvenbahn bewegt wird. Hierbei bleibt ein Abstand des Abstreifmittels von der Einzugswalze zumindest im Wesentlichen, vorzugsweise vollständig, unverändert.

Das erfindungsgemäße Verfahren ist mittels des erfindungsgemäßen Schneidwerks besonders einfach durchführbar. Die Vorteile des Verfahrens ergeben sich entsprechend der vorstehenden Beschreibung. Insbesondere ist es möglich, die Einzugswalze relativ zu dem Tragrahmen zumindest innerhalb eines gewissen Bewegungsbereichs anzuheben oder abzusenken, ohne dass hierdurch der Abstand der Einzugswalze von dem Abstreifmittel verändert wird. Die Funktionalität des Abstreifens, die zur Verhinderung des beschriebenen Umwickelns der Einzugswalze mit geschnittenen Pflanzen essentiell ist, bleibt mithin unabhängig von einer Bewegung der Einzugswalze relativ zu dem Tragrahmen erhalten.

In einer vorteilhaften Ausgestaltung des erfindungsgemäßen Verfahrens wird die Bewegungseinrichtung mittels einer Steuerung angesteuert, woraufhin die Einzugswalze automatisch mittels mindestens eines Antriebsmittels bewegt wird. Eines manuellen Eingriffs eines Maschinenführers der jeweils zugeordneten Erntemaschine bedarf es folglich nicht, um die Einzugswalze zu bewegen.

Die automatische Steuerung der Bewegungseinrichtung ist insbesondere im Zusammenhang mit einem Reversierbetrieb von besonderem Vorteil. In einem solchen Reversierbetrieb wird die Einzugswalze in einer zu ihrer übrigen typischen Betriebsdrehrichtung entgegengesetzten Reversierdrehrichtung drehangetrieben, um eine Umwicklung der Einzugswalze aufzuheben. Hierbei ist es in aller Regel besonders vorteilhaft, die Einzugswalze anzuheben und auf diese Weise ihren Abstand zu einem Muldenboden des Schneidwerks zu vergrößern. Dieses Anheben wird nunmehr vorteilhafterweise automatisch ausgeführt, wobei die Steuerung im Zusammenhang mit der Aktivierung des Reversierbetriebs die Bewegungseinrichtung ansteuert und mithin automatisch die Anhebung der Einzugswalze bewirkt. Vorteilhafterweise wird die Einzugswalze zunächst angehoben, bevor die Einzugswalze in ihre Reversierdrehrichtung drehangetrieben wird.

Die Erfindung ist nachstehend anhand eines Ausführungsbeispiels, das in den Figuren dargestellt ist, näher erläutert. Es zeigt:
- Fig. 1:: Einen Längsschnitt durch eine erfindungsgemäße Erntemaschine, die mit einem erfindungsgemäßen Schneidwerk ausgestattet ist,
- Fig. 2:: Eine perspektivische Darstellung des erfindungsgemäßen Schneidwerks,
- Fig. 3:: Ein Detail eines Mittelbereichs des Schneidwerks gemäß Figur 2,
- Fig. 4:: Ein Detail einer Bewegungseinrichtung des Schneidwerks gemäß Figur 2,
- Fig. 5:: Ein Querschnitt durch das Schneidwerk gemäß Figur 2, wobei sich die Einzugswalze in einer Tiefposition befindet,
- Fig. 6:: Der Querschnitt gemäß Figur 5, wobei sich die Einzugswalze in einer Mittelposition befindet,
- Fig. 7:: Der Querschnitt gemäß Figur 5, wobei sich die Einzugswalze in einer Hochposition befindet,
- Fig. 8:: Ein Querschnitt durch das Schneidwerk gemäß Figur 2, wobei eine Mehrzahl von Positionen der Einzugswalze relativ zu einem Tragrahmen des Schneidwerks in einer Überlagerung veranschaulicht ist und
- Fig. 9:: Ein Detail der Bewegungseinrichtung gemäß Figur 4, wobei eine Mehrzahl von Positionen eines Bewegungselements relativ zu einem Auflager in einer Überlagerung veranschaulicht ist.

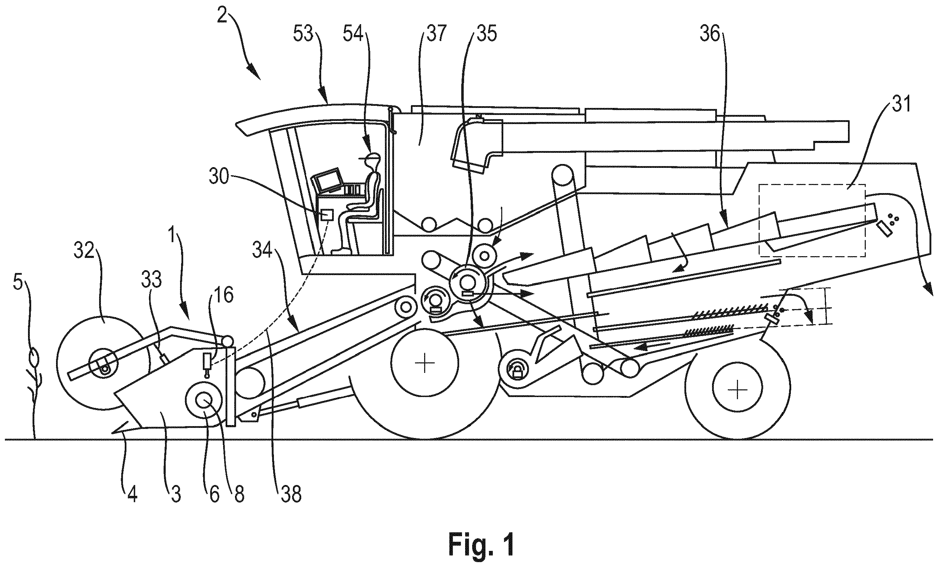

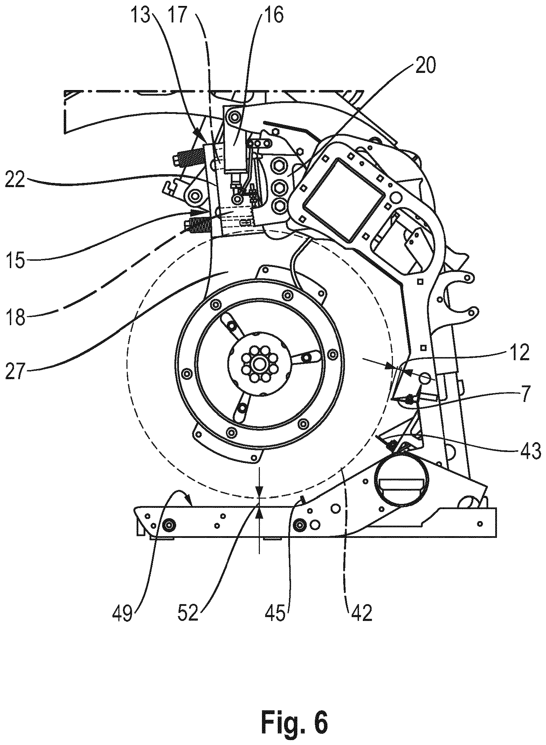

Ein Ausführungsbeispiel, das in den **Figuren 1 bis 9** gezeigt ist, umfasst eine erfindungsgemäße Erntemaschine **2,** die hier in Form eines Mähdreschers ausgebildet ist. Die Erntemaschine **2** ist mit einer Verbrennungskraftmaschine **31,** einem Korntank **37** sowie einer Mehrzahl von Arbeitsorganen ausgestattet. Insbesondere umfasst die Erntemaschine **2** ein erfindungsgemäßes Schneidwerk **1.** Ferner weist die Erntemaschine **2** einen Schrägförderer **34,** ein Dreschorgan **35** sowie ein Trennorgan **36** auf. Mittels dieser Arbeitsorgane sind Pflanzen **5** derart verarbeitbar, dass Früchte der Pflanzen **5** von Pflanzenresten abtrennbar und sodann dem Korntank **37** zuführbar sind.

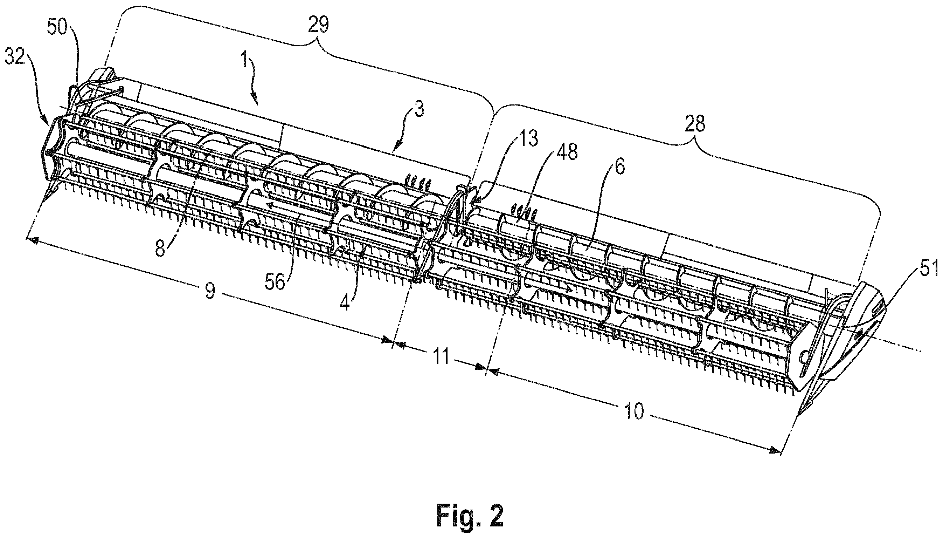

Das erfindungsgemäße Schneidwerk **1,** das im Weiteren anhand der **Figuren 2 bis 9** genauer erläutert wird, umfasst einen Tragrahmen **3,** an dem die einzelnen Einrichtungen des Schneidwerks **1** angeordnet sind. Insbesondere verfügt das Schneidwerk **1** über einen Mähbalken **4,** mittels dessen die Pflanzen **5** abschneidbar sind. Der Mähbalken **4** erstreckt sich im Wesentlichen über eine gesamte Breite des Schneidwerks **1.** Um die Pflanzen **5** dem Mähbalken **4** zuzuführen und zudem die Pflanzen **5** nach ihren Abschnitt geordnet auf einem nicht weiter beschriebenen Schneidtisch abzulegen, verfügt das Schneidwerk **1** über eine Haspel **32,** die sich gleichermaßen über die gesamte Breite des Schneidwerks **1** erstreckt. Die Haspel **32** ist drehantreibbar ausgebildet, sodass sie fortwährend die Pflanzen **5** erfassen und dem Schneidwerk **1** zuführen kann. Zwecks einer Veränderung eine Arbeitshöhe der Haspel **32** wirkt selbige mit mindestens einem Antriebsmittel **33** zusammen, das hier in Form einer Kolben-Zylinder-Einheit ausgebildet ist. Auf diese Weise ist die Haspel **32** anhebbar und/oder absenkbar.

Das Schneidwerk **1** verfügt ferner über eine langgestreckte Einzugswalze **6,** die sich ebenfalls zumindest im Wesentlichen über die gesamte Breite des Schneidwerks **1** erstreckt. Die Einzugswalze **6** dient dazu, die mittels des Mähbalkens **4** abgeschnittenen Pflanzen **5** ausgehend von Seitenbereichen **9, 10** in Richtung eines Mittelbereichs **11** zu fördern. Dies ist notwendig, da eine Breite der Erntemaschine **2** die Breite des Schneidwerks **1** deutlich unterschreitet, wobei insbesondere eine Breite des Schrägförderers **34** deutlich kleiner ist als die Breite des Schneidwerks **1.** Zwecks Übergabe der geschnittenen Pflanzen **5** an den Schrägförderer **34** ausgehend von dem Schneidwerk **1** ist es mithin notwendig, die geschnittenen Pflanzen **5** zunächst in dem Mittelbereich **11** zusammenzuführen, um sie sodann von dort ausgehend durch eine rückwärtig an dem Schneidwerk **1** angeordnete Übergabeöffnung **48** an den Schrägförderer **34** zu übergeben. Die Einzugswalze **6** ist hier in Form einer Einzugsschnecke ausgebildet, wobei die Einzugswalze **6** in ihren Seitenbereichen **9, 10** jeweils gegenläufig gewendelt ausgebildet ist, sodass eine Förderrichtung der Einzugswalze **6** jeweils in Richtung des Mittelbereichs **11** gerichtet ist.

Das Schneidwerk **1** umfasst eine Bewegungseinrichtung **13,** die mit der Einzugswalze **6** zusammenwirkt. In dem gezeigten Beispiel ist die Bewegungseinrichtung **13** in einer Mitte der Einzugswalze **6** angeordnet. Die Bewegungseinrichtung **13** dient dazu, die Einzugswalze **6** relativ zu dem Tragrahmen **3** zu bewegen, wobei insbesondere ein Abstand **52** der Einzugswalze **6** von einem Muldenboden **49** vergrößert und/oder verkleinert werden kann. In dem gezeigten Beispiel ist die Einzugswalze **6** an ihren einander gegenüberliegenden Enden **50, 51** fest an dem Tragrahmen **3** des Schneidwerks **1** angeordnet. Die Bewegung der Einzugswalze **6** mittels der Bewegungseinrichtung **13** findet mithin lediglich in der Mitte der Einzugswalze **6** statt, sodass eine Wirkung der Bewegung in dem Mittelbereich **11** des Schneidwerks **1** maximal ist und in den Seitenbereichen **9, 10** in Richtung der Enden **50, 51** der Einzugswalze **6** sukzessive abnimmt. Dies ist insoweit hinsichtlich der gewünschten Wirkung im Zuge der Bewegung der Einzugswalze **6** ausreichend, als die geschnittenen Pflanzen **5** in dem Mittelbereich **11** zusammengeführt werden, sodass eine Anpassung des Abstandes **52** der Einzugswalze **6** von dem Muldenboden **49** insbesondere in dem Mittelbereich **11** von Bedeutung ist. Die demgegenüber deutlich geringere Dichte der geschnittenen Pflanzen **5** in äußeren Endbereichen der Seitenbereiche **9, 10** des Schneidwerks **1** verlangt mithin nicht in demselben Maß nach einer Bewegung der Einzugswalze **6** relativ zu dem Tragrahmen **3.**

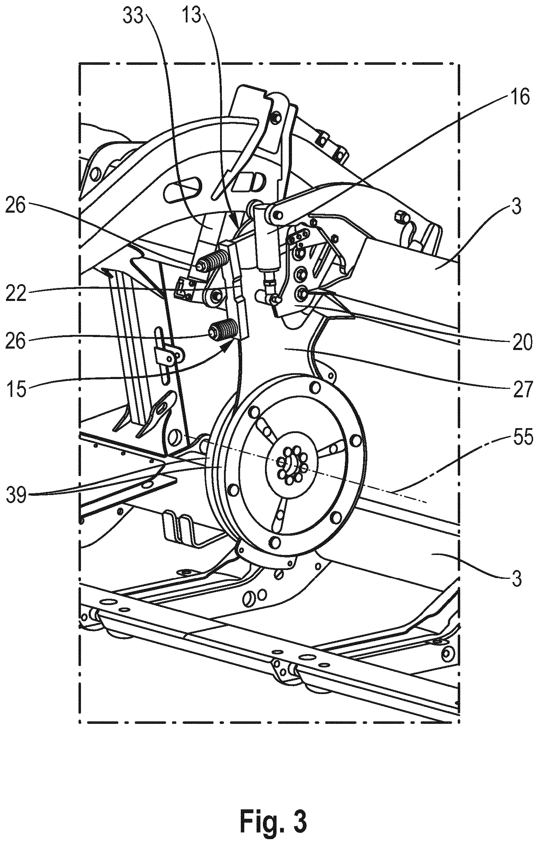

Die Bewegungseinrichtung **13** ist in dem gezeigten Beispiel mit einem Viergelenk **15** ausgestattet. Dieses ist wiederum mittels eines in sich starren Übertragungselements **27** mit der Einzugswalze **6** gekoppelt. Dies ergibt sich besonders gut anhand von **Figur 3****,** in der die Einzugswalze **6** als solche zwecks besserer Übersichtlichkeit nicht gesondert dargestellt ist. Das Übertragungselement **27** weist zwei einander gegenüberliegende Seiten auf, an denen jeweils eine Koppelscheibe **39** angeordnet ist. Die Koppelscheiben **39** sind jeweils um eine Drehachse **55** relativ zu dem Übertragungselement **27** verdrehbar, sodass die Einzugswalze **6** mittels der Koppelscheiben **39** verdrehbar an dem Übertragungselement **27** lagerbar ist. Die gezeigte Ausgestaltung hat zur Folge, dass die Einzugswalze **6** mittels des Übertragungselements **27** in einen linken Abschnitt **28** und einen rechten Abschnitt **29** unterteilt ist.

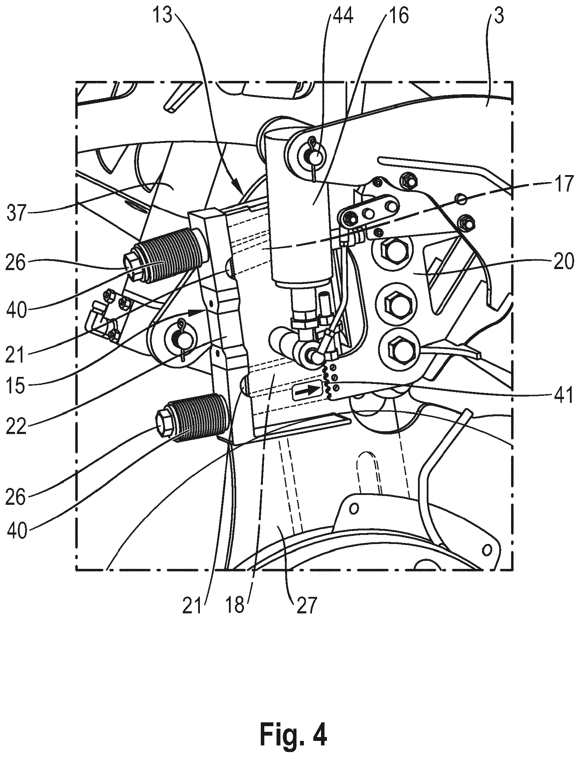

Das Viergelenk **15** der Bewegungseinrichtung **13** umfasst ein Bewegungselement **22,** das relativ zu einem Auflager **20** der Bewegungseinrichtung **13** bewegbar ist. Das Auflager **20** ist wiederum starr an dem Tragrahmen **3** des Schneidwerks **1** angeordnet. Eine Bewegung des Bewegungselements **22** relativ zu dem Auflager **20** ist hier lediglich innerhalb einer nicht gesondert dargestellten Bewegungsebene möglich, die senkrecht zu einer Längsachse **8** der Einzugswalze **6** orientiert ist. Hierzu ist das Bewegungselement **22** mittels zweier Pendelstäbe **17, 18,** die sich insbesondere anhand der **Figuren 4****,** **8** **und** **9** ergeben, an dem Auflager **20** gelagert. Zudem sind das Auflager **20** und das Bewegungselement **22** mittels zweier Spannelemente **26** miteinander gekoppelt, wobei die Spannelemente **26** das Bewegungselement **22** gegen das Auflager **20** verspannen. Die Spannelemente **26** sind hier von Schraubbolzen gebildet, die gelenkig an dem Auflager **20** angeschlossen sind, wobei die Spannelemente **26** jeweils mit einer Feder **40** zusammenwirken. Diese Federn **40** erlauben einen Bewegungsspielraum des Bewegungselements **22** relativ zu den Spannelementen **26,** sodass Bewegungen des Bewegungselements **22** relativ zu dem Auflager **20** nicht durch die Spannelemente **26** blockiert sind.

Die Pendelstäbe **17, 18** sind jeweils an ihren Enden **19, 21** gelenkig sowohl an dem Bewegungselement **22** als auch an dem Auflager **20** angeordnet. Mittels dieser Gelenke sind die Pendelstäbe **17, 18** relativ zu dem Bewegungselement **22** sowie relativ zu dem Auflager **20** verdrehbar. Dabei sind die Pendelstäbe 17, **18** in einer gemeinsamen Ebene angeordnet wobei die Gelenke eine Verdrehung der Pendelstäbe **17, 18** an ihren jeweiligen Enden **19, 21** jeweils um eine Drehachse erlauben, die parallel zu der Längsachse **8** der Einzugswalze **6** orientiert sind. Dies hat zur Folge, dass die Pendelstäbe **17, 18** eine Bewegung des Bewegungselements **22** relativ zu dem Auflager **20** in der beschriebenen Bewegungsebene ermöglichen, die senkrecht zu der Längsachse **8** der Einzugswalze **6** orientiert ist.

Zwecks Bewegung des Bewegungselements **22** verfügt die Bewegungseinrichtung **13** über ein Antriebsmittel **16,** das hier in Form einer elektrohydraulischen Kolben-Zylinder-Einheit gebildet ist. Das Antriebsmittel **16** ist an einem ersten Anlenkpunkt **44** gelenkig an den Tragrahmen **3** des Schneidwerks **1** angelenkt. Ein gegenüberliegendes Ende des Antriebsmittels **16** ist analog gelenkig an das Bewegungselement **22** angelenkt. Diese Ausgestaltung hat zur Folge, dass eine Längenänderung des Antriebsmittels **16,** die mittels eines Ein- oder Ausfahrens des Kolbens relativ zu dem Zylinder der Kolben-Zylinder-Einheit erfolgt, mit einer Bewegung des Bewegungselements **22** relativ zu dem Auflager **20** einhergeht. Die spezielle Lagerung des Bewegungselements **22** an dem Auflager **20** unter Verwendung der beiden Pendelstäbe **17, 18** führt dabei dazu, dass die axiale Längenänderung des Antriebsmittels **16** in eine kombinierte translatorisch-rotatorische Bewegung des Bewegungselements **22** innerhalb seiner Bewegungsebene übersetzt wird. Diese translatorisch-rotatorische Bewegung des Bewegungselements **22** wird mittels des starr an dem Bewegungselement **22** angeordneten Übertragungselements **27** auf die Einzugswalze **6** übertragen, sodass die Bewegung der Einzugswalze **6** erfindungsgemäß auf einer Kurvenbahn **14** erfolgt. Dies wird nachstehend gesondert erläutert.

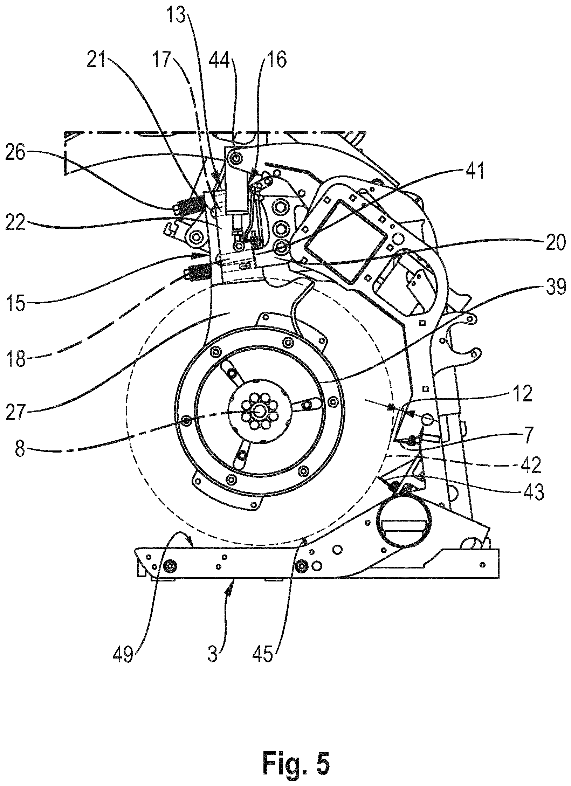

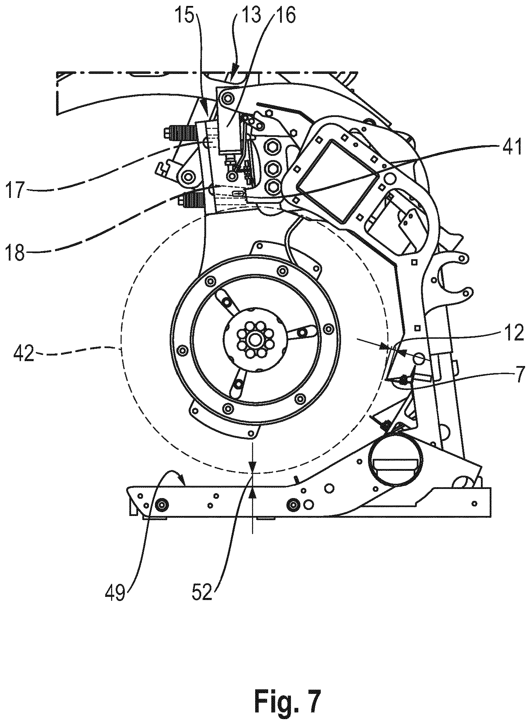

Der Betrieb der Bewegungseinrichtung **13** und die damit einhergehende Bewegung des Bewegungselements **22** geht demzufolge mit einer gewünschten Bewegung der Einzugswalze **6** relativ zu dem Tragrahmen **3** und insbesondere einem Muldenboden **49** einher. Dies ist besonders gut anhand der **Figuren 5 bis 7** erkennbar, die drei verschiedene Positionen der Einzugswalze **6** relativ zu dem Tragrahmen **3** veranschaulichen. Somit zeigt **Figur 5** eine maximal abgesenkte Tiefposition der Einzugswalze **6,** in der ein Abstand **52** eines Umfangskreises **42** der Einzugswalze **6** zu dem Muldenboden **49** minimal ist. Der Umfangskreis **42** beschreibt dabei einen mit einem Außendurchmesser der Wendel der Einzugswalze **6** gezogenen Kreis um die Längsachse **8** der Einzugswalze **6.** Die Tiefposition der Einzugswalze **6** gemäß **Figur 5** ist für einen Maschinenführer **54** der zugehörigen Erntemaschine **2** unmittelbar mittels eines Höhenindikators **41** ablesbar. Diese veranschaulicht eine Position des Bewegungselements **22** relativ zu dem Auflager **20** mittels eines an dem Bewegungselement **22** dargestellten Pfeils, der sich im Zuge der Bewegung des Bewegungselements **22** entlang einer zugeordneten Skala an einem Rand des Auflagers **20** bewegt. Ausgehend von der Tiefposition der Einzugswalze wird nunmehr das Antriebsmittel **16** verkürzt, das heißt dessen Kolben in den zugehörigen Zylinder eingefahren. Hierdurch wird das Bewegungselement **22** relativ zu dem Auflager **20** angehoben, wodurch gleichermaßen die Einzugswalze **6** angehoben wird. Es ist ohne Weiteres erkennbar, dass ein Abstand **52** des Umfangskreises **42** von dem Muldenboden **49** gegenüber der in **Figur 5** dargestellten Tiefposition der Einzugswalze **6** vergrößert ist. Schließlich veranschaulicht **Figur 7** eine Hochposition der Einzugswalze **6,** in der der Abstand **52** des Umfangskreises **42** von dem Bodenboden **49** maximal ist. Die Bewegungseinrichtung **13** ist hier stufenlos verstellbar, sodass die hier beschriebenen Positionen lediglich beispielhaften Charakter haben.

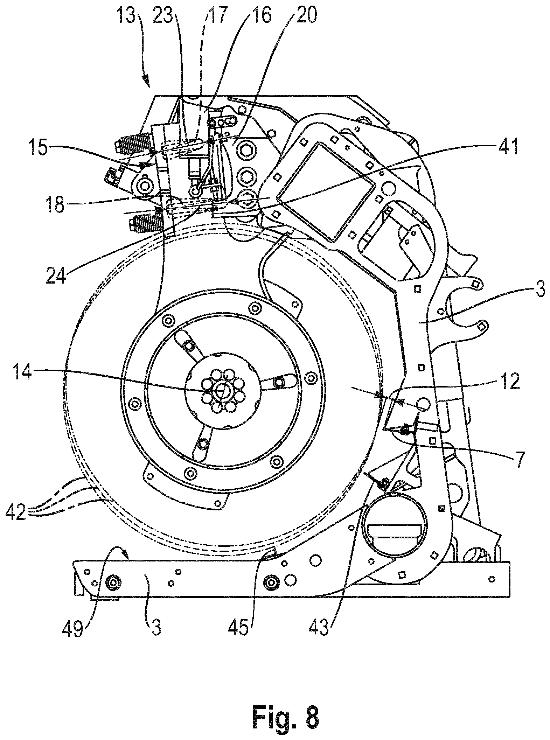

Die Bewegung der Einzugswalze **6** relativ zu dem Tragrahmen **3** erfolgt dabei nicht entlang einer Geraden, sondern entlang einer Kurvenbahn **14,** die sich insbesondere anhand von **Figur 8** ergibt. Diese veranschaulicht noch einmal die zuvor beschriebenen Positionen Hochposition, Mittelposition und Tiefposition in einer überlagerten Darstellung des Umfangskreises **42** der Einzugswalze **6.** Ferner ist die Kurvenbahn **14** veranschaulicht, die einen Bewegungspfad der Längsachse **8** der Einzugswalze **6** im Zuge ihrer Bewegung veranschaulicht. Es ist erkennbar, dass dieser Bewegungspfad gekrümmt verläuft und auf diese Weise die Kurvenbahn **14** bildet. Die Bewegung der Einzugswalze **6** entlang dieser Kurvenbahn **14** bietet erfindungsgemäß den besonderen Vorteil, dass ein Abstand **12** des Umfangskreis **42** der Einzugswalze **6** von einem Abstreifmittel **7,** das ortsfest an dem Tragrahmen **3** des Schneidwerks **1** angeordnet ist, zumindest im Wesentlichen unverändert bleibt. Dies ist anhand der Überlagerung des Umfangskreis ist **42** in **Figur 8** besonders gut nachvollziehbar.

Das Abstreifmittel **7,** das hier von einer langgestreckten, sich parallel zu der Einzugswalze **6** erstreckenden Abstreifleiste gebildet ist, ist der Einzugswalze **6** zugeordnet und dient dazu, in Umfangsrichtung der Einzugswalze **6** "mitgeschleppte" Pflanzen **5** abzustreifen. Auf diese Weise wird verhindert, dass die Pflanzen **5** die Einzugswalze **6** umwickeln und letztere derart festsetzen, dass die Einzugswalze **6** nicht weiter betrieben werden kann. Letzteres würde danach verlangen, den Betrieb der Erntemaschine **2** vorübergehend einzustellen und die "Verstopfung" der Einzugswalze **6** aufzuheben. Mithin besteht das Bestreben, das Umwickeln der Einzugswalze **6** mit abgeschnittenen Pflanzen **5** soweit möglich zu verhindern. Der Abstand **12** zwischen der Einzugswalze **6** und den Abstreifmittel **7** ist für diesen Erfolg ausschlaggebend, wobei insbesondere ein zu großer Abstand **12** die Wirkung des Abstreifmittels **7** zumindest vermindert, da ein mit dem Abstand **12** korrespondierender Zwischenraum zwischen der Einzugswalze **6** und dem Abstreifmittel **7** es sodann erlaubt, dass mitgeschleppte Pflanzen **5** entlang der Umfangsrichtung der Einzugswalze **6** geführt werden und schließlich letztere umwickeln.

Die erfindungsgemäße Ausgestaltung des Schneidwerks **1** erlaubt nunmehr aufgrund der Führung der Einzugswalze **6** auf der Kurvenbahn **14** eine Veränderung des Abstands **52** zwischen der Einzugswalze **6** bzw. deren Umfangskreis **42** und dem Muldenboden **49,** ohne dass der Abstand **12** zwischen der Einzugswalze **6** bzw. dem Umfangskreis **42** und dem Abstreifmittel **7** verändert wird. Neben dem Abstreifmittel **7,** dessen Abstand **12** von der Einzugswalze **6** sich im Zuge der Bewegung der letzteren nicht verändert, verfügt das hier gezeigte Schneidwerk **1** ferner über zwei weitere Abstreifmittel **43, 45,** die gegenüber dem ersten Abstreifmittel **7** in tieferen Stellungen bezogen auf den Tragrahmen **3** angeordnet sind. Die Abstände der Einzugswalze **6** zu diesen weiteren Abstreifmitteln **43, 45** bleibt im Zuge der Bewegung der Einzugswalze **6** nicht unverändert. Für die gewünschte Abstreifwirkung sind diese weiteren Abstreifmittel **43, 45** jedoch von untergeordneter Bedeutung, sodass insbesondere das Beibehalten des Abstandes **12** zwischen der Einzugswalze **6** und dem hier obersten Abstreifmittel **7** Priorität besitzt.

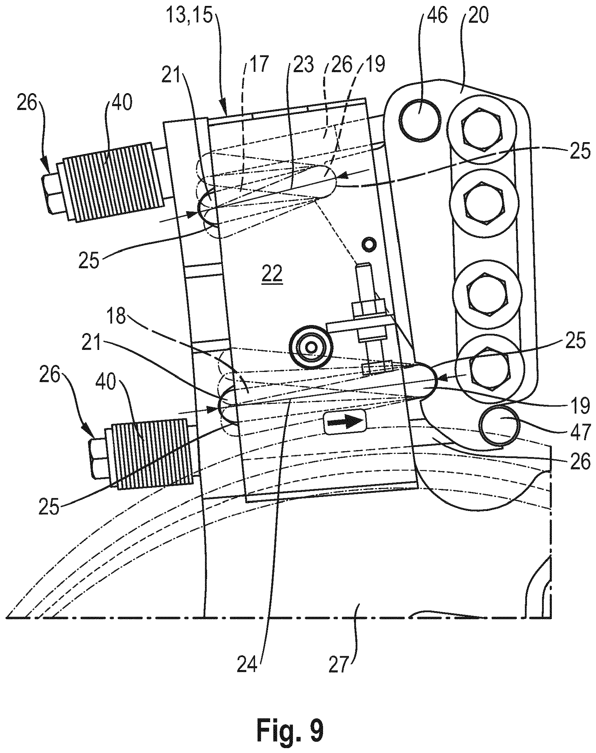

Die Führung der Einzugswalze **6** auf der Kurvenbahn **14** wird in dem gezeigten Beispiel mittels des Viergelenks **15** der Bewegungseinrichtung **13** erreicht. Von besonderer Bedeutung sind hierbei die Pendelstäbe **17, 18,** die sich besonders gut anhand von **Figur 9** ergeben. Diese veranschaulicht eine Mehrzahl verschiedener Positionen des Bewegungselements **22** relativ zu dem Auflager **20** in einer überlagerten Darstellung, wodurch ein Bewegungsablauf der Pendelstäbe **17, 18** veranschaulicht wird. Die Pendelstäbe **17, 18** sind jeweils mit ihren beiden Enden **19, 21** in zugeordneten Lagerpfannen **25** sowohl an den Bewegungselement **22** als auch an dem Auflager **20** gelagert. Diese Lagerpfannen **25** erlauben eine verdrehfreie Lagerung der Pendelstäbe **17, 18** wobei auf eine unmittelbare Kopplung der Pendelstäbe **17, 18** sowohl mit dem Bewegungselement **22** als auch mit dem Auflager **20** verzichtet wird. Dies hat den Vorteil, dass zwischen den Pendelstäben **17, 18** und dem Bewegungselement **22** sowie dem Auflager **20** auftretende Reibkräfte minimal sind. Dies erlaubt wiederum eine besonders präzise Führung des Bewegungselements **22** relativ zu dem Auflager **20,** die nur einem sehr geringen Spiel unterliegt. Die Pendelstäbe **17, 18** weisen hier verschiedene Längen **23, 24** auf, wobei der in dem gezeigten Beispiel obere Pendelstab **17** kürzer ausgebildet ist als der untere Pendelstab **18.** Eine Ausgestaltung mit gleich langen Pendelstäben ist ebenso denkbar. Die Pendelstäbe **17, 18** bewirken, dass sich das Bewegungselement **22** im Zuge seines Antriebs mittels des in **Figur 9** nicht dargestellten Antriebsmittels **16** sich nicht auf einer Geraden relativ zu dem Auflager **20** bewegt, sondern eine kombinierte translatorisch-rotatorische Bewegung ausführt. Die zur dauerhaften Verbindung des Bewegungselements **22** mit dem Auflager **20** vorgesehenen Spannelemente **26** sind mittels Gelenken **46, 47** verdrehbar an dem Auflager **20** gelagert, sodass sie der Bewegung des Bewegungselements **22** folgen können.

Die erfindungsgemäße Erntemaschine **2** ist in dem gezeigten Beispiel gemäß **Figur 1** in einer Fahrerkabine **53** mit einer Steuerung **30** ausgestattet, die hier zur allgemeinen Steuerung verschiedener Arbeitsorgane der Erntemaschine **2** verwendet wird. Unter anderem ist die Steuerung **30** mittels einer kabellosen Datenverbindung **38** mit der Bewegungseinrichtung **13** und hier insbesondere dem Antriebsmittel **16** verbunden. Hierdurch ist die Möglichkeit geschaffen, das Antriebsmittel **16** automatisch, das heißt insbesondere ohne Zutun des Maschinenführers **54** anzusteuern, sodass eine Bewegung der Einzugswalze **6** relativ zu dem Tragrahmen **3** automatisch stattfinden kann. Dies kann beispielsweise im Zusammenhang mit einem vorstehend beschriebenen Reversierbetrieb der Einzugswalze **6** vorteilhaft sein. Ebenfalls es ist denkbar, dass die Einzugswalze **6** automatisch in Abhängigkeit gesondert erfasster Ernte- und/oder Betriebsparameter bewegt wird. Dies kann beispielsweise eine Dichte der Pflanzen **5** auf dem Untergrund betreffen, wobei mit zunehmender Dichte der Pflanzen **5** ein dickerer Pflanzenteppich in dem Schneidwerk **1** zu erwarten ist, der zur Vorbeugung einer Verstopfung des Schneidwerks **1** sodann eine Anhebung der Einzugswalze **6** indiziert. Derartige Prozesse können mittels der Steuerung **30** ohne gesonderten Eingriff des Maschinenführers **54** erfolgen. Auf diese Weise wird der Maschine für **54** entlastet und zudem einer Fehlbedienung vorgebeugt.

### Bezugszeichenliste

- 1: Schneidwerk
- 2: Erntemaschine
- 3: Tragrahmen
- 4: Mähbalken
- 5: Pflanze
- 6: Einzugswalze
- 7: Abstreifmittel
- 8: Längsachse
- 9: Seitenbereich
- 10: Seitenbereich
- 11: Mittelbereich
- 12: Abstand
- 13: Bewegungseinrichtung
- 14: Kurvenbahn
- 15: Viergelenk
- 16: Antriebsmittel
- 17: Pendelstab
- 18: Pendelstab
- 19: erstes Ende
- 20: Auflager
- 21: zweites Ende
- 22: Bewegungselement
- 23: Länge des ersten Pendelstabs
- 24: Länge des zweiten Pendelstabs
- 25: Lagerpfanne
- 26: Spannelement
- 27: Übertragungselement
- 28: linker Abschnitt
- 29: rechter Abschnitt
- 30: Steuerung
- 31: Verbrennungskraftmaschine
- 32: Haspel
- 33: Antriebsmittel
- 34: Schrägförderer
- 35: Dreschorgan
- 36: Trennorgan
- 37: Korntank
- 38: Datenverbindung
- 39: Koppelscheiben
- 40: Feder
- 41: Höhenindikator
- 42: Umfangskreis
- 43: Abstreifmittel
- 44: Anlenkpunkt
- 45: Abstreifmittel
- 46: Gelenk
- 47: Gelenk
- 48: Übergabeöffnung
- 49: Muldenboden
- 50: rechtes Ende
- 51: linkes Ende
- 52: Abstand
- 53: Fahrerkabine
- 54: Maschinenführer
- 55: Drehachse
- 56: Breitenrichtung

## Patentansprüche

1. Schneidwerk (1) für eine landwirtschaftliche Erntemaschine (2), insbesondere einen Mähdrescher, umfassend
- einen Tragrahmen (3),
- einen an dem Tragrahmen (3) angeordneten Mähbalken (4) zum Schneiden von Pflanzen (5),
- eine drehantreibbar an dem Tragrahmen (3) angeordnete Einzugswalze (6) zur Förderung geschnittener Pflanzen (5) sowie
- mindestens ein an dem Tragrahmen (3) angeordnetes, der Einzugswalze (6) zugeordnetes Abstreifmittel (7),
wobei sich eine Längsachse (8) der Einzugswalze (6) in eine Breitenrichtung (56) des Schneidwerks (1) erstreckt,
wobei die Einzugswalze (6) dazu ausgebildet ist, geschnittene Pflanzen (5) ausgehend von Seitenbereichen (9, 10) des Schneidwerks (1) in Richtung eines Mittelbereichs (11) des Schneidwerks (1) zu fördern,
wobei das Abstreifmittel (7) sich in einem Abstand (12) von der Einzugswalze (6) erstreckt, sodass sich im Zuge eines Betriebs der Einzugswalze (6) in deren Umfangsrichtung bewegende Pflanzen (5) mittels des Abstreifmittels (7) abstreifbar sind,
wobei die Einzugswalze (6) mittels einer Bewegungseinrichtung (13) relativ zu dem Tragrahmen (3) bewegbar ist,
**dadurch gekennzeichnet, dass**
das Abstreifmittel (7) ortsfest an dem Tragrahmen (3) angeordnet ist, wobei
die Einzugswalze (6) mittels der Bewegungseinrichtung (13) derart entlang einer Kurvenbahn (14) bewegbar ist, dass der Abstand (12) des Abstreifmittels (7) von der Einzugswalze (6) im Zuge der Bewegung zumindest im Wesentlichen unverändert bleibt.

2. Schneidwerk (1) nach Anspruch 1, **dadurch gekennzeichnet, dass** die Bewegungseinrichtung (13) ein Viergelenk (15) umfasst, mittels dessen eine axiale Antriebskraft eines Antriebsmittels (16) in eine kombinierte translatorisch-rotatorische Bewegung übersetzbar ist.

3. Schneidwerk (1) nach Anspruch 2, **dadurch gekennzeichnet, dass** das Viergelenk (15) zumindest zwei Pendelstäbe (17, 18) umfasst, deren erste Enden (19) jeweils verdrehbar an einem Auflager (20) und deren zweite Enden (21) jeweils verdrehbar sowie gemeinsam an einem Bewegungselement (22) gelagert sind.

4. Schneidwerk (1) nach Anspruch 3, **dadurch gekennzeichnet, dass** die Pendelstäbe (17, 18) verschiedene Längen (23, 24) aufweisen, wobei vorzugsweise ein erster Pendelstab (17), der oberhalb eines zweiten Pendelstabs (18) angeordnet ist, kürzer ausgebildet ist als der zweite Pendelstab (18).

5. Schneidwerk (1) nach Anspruch 3 oder 4, **dadurch gekennzeichnet, dass** zumindest das erste Ende (19) eines der Pendelstäbe (17, 18), vorzugsweise die ersten Enden (19) sämtlicher Pendelstäbe (17, 18), in eine Lagerpfanne (25) eingelegt ist, wobei das Bewegungselement (22) mittels mindestens eines Spannelements (26) gegen das Auflager (20) verspannt ist.

6. Schneidwerk (1) nach einem der Ansprüche 1 bis 5, **dadurch gekennzeichnet, dass** die Bewegungseinrichtung (13) in dem Mittelbereich (11) des Schneidwerks (1) angeordnet ist, wobei vorzugsweise die Einzugswalze (6) mittels eines Übertragungselements (27) in einen linken Abschnitt (28) und einen rechten Abschnitt (29) unterteilt ist.

7. Schneidwerk (1) nach einem der Ansprüche 1 bis 6, **dadurch gekennzeichnet, dass** die Bewegungseinrichtung (13) mindestens ein Antriebsmittel (16) umfasst, mittels dessen die Bewegungseinrichtung (13) antreibbar ist, wobei das Antriebsmittel (16) vorzugsweise von einem hydraulischen, elektrohydraulischen, pneumatischen oder elektropneumatischen Kolben-Zylinder-Einheit oder einem Linearantrieb gebildet ist.

8. Schneidwerk (1) nach Anspruch 7, **gekennzeichnet durch** eine Steuerung (30), mittels derer das Antriebsmittel (16) automatisch, vorzugsweise in Abhängigkeit mindestens eines Ernteparameters und/oder mindestens eines Betriebsparameters, ansteuerbar ist.

9. Landwirtschaftliche Erntemaschine (2), insbesondere ein Mähdrescher, umfassend
- eine Verbrennungskraftmaschine (31) zum Antrieb der Erntemaschine (2) sowie
- eine Mehrzahl von Arbeitsorganen zur Verarbeitung von Erntegut, wobei ein Arbeitsorgan von einem Schneidwerk (1) gemäß einem der Ansprüche 1 bis 8 gebildet ist.

10. Verfahren zum Betrieb eines Schneidwerks (1) gemäß einem der Ansprüche 1 bis 8, umfassend die folgenden Verfahrensschritte:
a) Mittels eines an einem Tragrahmen (3) des Schneidwerks (1) angeordneten Mähbalkens (4) werden auf einem Untergrund stehende Pflanzen (5) abgeschnitten.
b) Abgeschnittene Pflanzen (5) werden mittels einer an dem Tragrahmen (3) gelagerten, drehangetriebenen Einzugswalze (6), die sich in eine Breitenrichtung (56) des Schneidwerks (1) erstreckt, in Richtung eines Mittelbereichs (11) des Schneidwerks (1) gefördert.
c) Sich im Zuge eines Betriebs der Einzugswalze (6) in deren Umfangsrichtung bewegende Pflanzen (5) werden mittels mindestens eines an dem Tragrahmen (3) ortsfest angeordneten Abstreifmittels (7), das der Einzugswalze (6) zugeordnet ist und sich in einem Abstand (12) von der Einzugswalze (6) erstreckt, abgestreift, **gekennzeichnet durch** den folgenden Verfahrensschritt:
d) Die Einzugswalze (6) wird mittels einer Bewegungseinrichtung (13) relativ zu dem Tragrahmen (3) auf einer Kurvenbahn (14) bewegt, wobei der Abstand (12) des Abstreifmittels (7) von der Einzugswalze (6) zumindest im Wesentlichen unverändert bleibt.

11. Verfahren nach Anspruch 10, **dadurch gekennzeichnet, dass** die Bewegungseinrichtung (13) mittels einer Steuerung (30) angesteuert wird, woraufhin die Einzugswalze (6) mittels mindestens eines Antriebsmittels (16) automatisch bewegt wird.

12. Verfahren nach Anspruch 11, **dadurch gekennzeichnet, dass** die Einzugswalze (6) im Zusammenhang mit einem Reversierbetrieb, in dem die Einzugswalze (6) in eine einer Betriebsdrehrichtung entgegengesetzte Reversierdrehrichtung drehangetrieben wird, automatisch angehoben wird, insbesondere bevor die Einzugswalze (6) in die Reversierdrehrichtung drehangetrieben wird.

## Claims

1. Cutting unit (1) for an agricultural harvesting machine (2), in particular a combine harvester, comprising
- a support frame (3),
- a cutter bar (4) arranged on the support frame (3) for cutting plants (5),
- a feed roller (6) arranged on the support frame (3) so as to be driven in rotation for conveying cut plants (5), and
- at least one stripping means (7) arranged on the support frame (3) and associated with the feed roller (6),
wherein a longitudinal axis (8) of the feed roller (6) extends in a width direction (56) of the cutting unit (1),
wherein the feed roller (6) is designed to convey cut plants (5) from side regions (9, 10) of the cutting mechanism (1) in the direction of a centre region (11) of the cutting mechanism (1),
wherein the stripping means (7) extends at a distance (12) from the feed roller (6), so that plants (5) moving in the circumferential direction of the feed roller (6) in the course of its operation can be stripped by means of the stripping means (7),
wherein the feed roller (6) is movable relative to the support frame (3) by means of a movement device (13),
**characterised in that**
the stripping means (7) is arranged in a fixed position on the supporting frame (3), wherein
the feed roller (6) can be moved along a curved path (14) by means of the movement device (13) in such a way that the distance (12) of the stripping means (7) from the feed roller (6) remains at least substantially unchanged in the course of the movement.

2. Cutting unit (1) according to claim 1, **characterised in that** the movement device (13) comprises a four-bar linkage (15), by means of which an axial drive force of a drive means (16) can be translated into a combined translatory-rotatory movement.

3. Cutting unit (1) according to claim 2, **characterised in that** the four-bar linkage (15) comprises at least two pendulum rods (17, 18), the first ends (19) of which are each rotatably mounted on a support (20) and the second ends (21) of which are each rotatably and jointly mounted on a movement element (22).

4. Cutting unit (1) according to claim 3, **characterised in that** the pendulum rods (17, 18) have different lengths (23, 24), wherein preferably a first pendulum rod (17), which is arranged above a second pendulum rod (18), is designed to be shorter than the second pendulum rod (18).

5. Cutting unit (1) according to claim 3 or 4, **characterised in that** at least the first end (19) of one of the pendulum rods (17, 18), preferably the first ends (19) of all the pendulum rods (17, 18), is inserted into a bearing socket (25), the movement element (22) being braced against the support (20) by means of at least one clamping element (26).

6. Cutting unit (1) according to one of claims 1 to 5, **characterised in that** the movement device (13) is arranged in the central region (11) of the cutting unit (1), the feed roller (6) preferably being divided into a left-hand section (28) and a right-hand section (29) by means of a transmission element (27).

7. Cutting unit (1) according to one of claims 1 to 6, **characterised in that** the movement device (13) comprises at least one drive means (16) by means of which the movement device (13) can be driven, wherein the drive means (16) is preferably formed by a hydraulic, electrohydraulic, pneumatic or electropneumatic piston-cylinder unit or a linear drive.

8. Cutting unit (1) according to claim 7, **characterised by** a control (30) by means of which the drive means (16) can be controlled automatically, preferably as a function of at least one harvesting parameter and/or at least one operating parameter.

9. Agricultural harvesting machine (2), in particular a combine harvester, comprising
- an internal combustion engine (31) for driving the harvester (2) and
- a number of working units for processing harvested crops,
wherein a working member is formed by a cutting unit (1) according to one of claims 1 to 8.

10. A method of operating a cutting unit (1) according to any one of claims 1 to 8, comprising the following method steps:
a) A cutter bar (4) arranged on a support frame (3) of the cutting unit (1) is used to cut plants (5) standing on a surface.
b) Cut plants (5) are conveyed towards a centre area (11) of the cutting unit (1) by means of a rotationally driven feed roller (6) mounted on the support frame (3), which extends in a width direction (56) of the cutting unit (1).
c) Plants (5) moving in the circumferential direction of the feed roller (6) during operation are stripped off by means of at least one stripping means (7) arranged in a fixed position on the support frame (3), which is associated with the feed roller (6) and extends at a distance (12) from the feed roller (6),
**characterised by** the following process step:
d) The feed roller (6) is moved relative to the support frame (3) on a curved path (14) by means of a movement device (13), whereby the distance (12) of the stripping means (7) from the draw-in roller (6) remains at least essentially unchanged.

11. Method according to claim 10, **characterised in that** the movement device (13) is actuated by means of a control (30), whereupon the feed roller (6) is moved automatically by means of at least one drive means (16).

12. Method according to claim 11, **characterised in that** the feed roller (6) is automatically raised in connection with a reversing operation, in which the feed roller (6) is driven in rotation in a reversing direction of rotation opposite to an operating direction of rotation, in particular before the feed roller (6) is driven in rotation in the reversing direction of rotation.

## Revendications

1. Tablier de coupe (1) pour une machine agricole de récolte (2), en particulier une moissonneuse-batteuse, incluant
- un cadre porteur (3),
- un lamier (4) disposé sur le cadre porteur (3) pour couper des plantes (5),
- un rouleau d'alimentation (6) disposé sur le cadre porteur (3) de manière entraînable en rotation pour convoyer des plantes (5) ainsi que
- au moins un moyen racleur (7) disposé sur le cadre porteur (3), associé au rouleau d'alimentation (6),
un axe longitudinal (8) du rouleau d'alimentation (6) s'étendant dans un sens de largeur (56) du tablier de coupe (1),
le rouleau d'alimentation (6) étant conçu pour convoyer des plantes coupées (5) à partir des zones latérales (9, 10) du tablier de coupe (1) en direction d'une zone centrale (11) du tablier de coupe (1),
le moyen racleur (7) s'étendant à une distance (12) du rouleau d'alimentation (6), de façon qu'au cours d'un fonctionnement du rouleau d'alimentation (6), des plantes (5) se déplaçant dans sa direction circonférentielle soient raclables au moyen du moyen racleur (7),
le rouleau d'alimentation (6) étant déplaçable par rapport au cadre porteur (3) au moyen d'un équipement de déplacement (13),
**caractérisé en ce que**
le moyen racleur (7) est disposé à demeure sur le cadre porteur (3),
le rouleau d'alimentation (6) étant déplaçable au moyen de l'équipement de déplacement (13) le long d'un plateau de came (14), de façon que la distance (12) du moyen racleur (7) au rouleau d'alimentation (6) reste au moins sensiblement inchangée au cours du déplacement.

2. Tablier de coupe (1) selon la revendication 1, **caractérisé en ce que** l'équipement de déplacement (13) inclut un quadrilatère articulé (15) au moyen duquel une force d'entraînement axiale d'un moyen d'entraînement (16) est convertible en un déplacement combiné en translation-rotation.

3. Tablier de coupe (1) selon la revendication 2, **caractérisé en ce que** le quadrilatère articulé (15) inclut au moins deux barres pendulaires (17, 18) dont les premières extrémités (19) sont supportées de manière respectivement tournante sur un appui (20) et dont des deuxièmes extrémités (21) sont supportées de manière respectivement tournante ainsi que conjointement sur un équipement de déplacement (22).

4. Tablier de coupe (1) selon la revendication 3, **caractérisé en ce que** les barres pendulaires (17, 18) présentent des longueurs différentes, préférentiellement une première barre pendulaire (17) qui est disposée au-dessus d'une deuxième barre pendulaire (18) étant de conception plus courte que la deuxième barre pendulaire (18).

5. Tablier de coupe (1) selon la revendication 3 ou 4, **caractérisé en ce qu'**au moins la première extrémité (19) d'une des barres pendulaires (17, 18), préférentiellement les premières extrémités (19) de toutes les barres pendulaires (17, 18), est logée dans une cuvette (25), l'équipement de déplacement (22) étant serré contre l'appui (20) au moyen au moins d'un élément de serrage (26).

6. Tablier de coupe (1) selon une des revendications 1 à 5, **caractérisé en ce que** l'équipement de déplacement (13) est disposé dans la zone centrale (11) du tablier de coupe (1), préférentiellement le rouleau d'alimentation (6) étant divisé au moyen d'un élément de transmission (27) en une portion gauche (28) et une portion droite (29).

7. Tablier de coupe (1) selon une des revendications 1 à 6, **caractérisé en ce que** l'équipement de déplacement (13) inclut au moins un moyen d'entraînement (16) au moyen duquel l'équipement de déplacement (13) est entraînable, le moyen d'entraînement (16) étant formé préférentiellement par une unité piston-cylindre hydraulique, électrohydraulique, pneumatique ou électropneumatique ou par un entraînement linéaire.

8. Tablier de coupe (1) selon la revendication 7, **caractérisé par** une commande (30) au moyen de laquelle le moyen d'entraînement (16) est commandable automatiquement, préférentiellement en fonction au moins d'un paramètre de récolte et/ou au moins d'un paramètre d'exploitation.

9. Machine agricole de récolte (2), en particulier une moissonneuse-batteuse, incluant
- un moteur à combustion interne (31) pour entraîner la machine de récolte (2) ainsi que
- une pluralité d'organes de travail pour travailler le produit,
un organe de travail étant formé par un tablier de coupe (1) selon une des revendications 1 à 8.

10. Procédé de fonctionnement d'un tablier de coupe (1) selon une des revendications 1 à 8, incluant les étapes de procédé suivantes :
a) Au moyen d'un lamier (4) disposé sur un cadre porteur (3) du tablier de coupe (1), des plantes (5) sur pied sur un sol sont coupées.
b) Des plantes coupées (5) sont convoyées en direction d'une zone centrale (11) du tablier de coupe (1) au moyen d'un rouleau d'alimentation (6) monté sur le cadre porteur (3), entraîné en rotation et s'étendant dans un sens de largeur (56) du tablier de coupe (1).
c) Des plantes (5) se déplaçant au cours d'un fonctionnement du rouleau d'alimentation (6) dans la direction circonférentielle de celui-ci sont raclées au moyen au moins d'un moyen racleur (7) qui est disposé à demeure sur le cadre porteur (3) et qui est associé au rouleau d'alimentation (6) et s'étend à une distance (12) du rouleau d'alimentation (6),
**caractérisé par** l'étape de procédé suivante :
d) Le rouleau d'alimentation (6) est déplacé sur un plateau de came (14) par rapport au cadre porteur (3) au moyen d'un équipement de déplacement (13), la distance (12) du moyen racleur (17) au rouleau d'alimentation (6) restant au moins sensiblement inchangée.

11. Procédé selon la revendication 10, **caractérisé en ce que** l'équipement de déplacement (13) est commandé au moyen d'une commande (30), après quoi le rouleau d'alimentation (6) est déplacé automatiquement au moyen au moins d'un moyen d'entraînement (16).

12. Procédé selon la revendication 11, **caractérisé en ce que** le rouleau d'alimentation (6) est levé automatiquement en relation avec un fonctionnement réversible dans lequel le rouleau d'alimentation (6) est entraîné en rotation dans un sens de rotation inversé contraire à un sens de rotation de fonctionnement, en particulier avant que le rouleau d'alimentation (6) ne soit entraîné en rotation dans le sens de rotation inversé.
